# EUROPÄISCHE PATENTANMELDUNG

(11) **EP 1 234 994 A2**
(43) Veröffentlichungstag der Anmeldung: **28.08.2002**
(21) Anmeldenummer: 02004090.3
(22) Anmeldetag: 25.02.2002
(51) Int. Cl.: F16D 65/092, F16D 65/095

(54) **Bremsbelaghalter für eine Scheibenbremse**

(30) Priorität: 24.02.2001 DE 10108973
(71) Anmelder: ROBERT BOSCH GMBH, 70442 Stuttgart (DE)
(72) Erfinder: Stelter, Friedrich, 71665 Vaihingen/Enz (DE); Burg, Andreas, 71640 Ludwigsburg (DE)

(57) **Zusammenfassung**

Die Erfindung betrifft einen Bremsbelaghalter, insbesondere einen Bremssattel mit einem einliegenden Reibbremsbelag (18), für eine Scheibenbremse. Zum teilweisen oder vollständigen Ausgleich eines Moments, das eine drehende Bremsscheibe (14) bei Betätigung der Scheibenbremse auf den gegen sie gedrückten Reibbremsbelag (18) um eine gedachte Achse senkrecht zur Bremsscheibe (14) ausübt, schlägt die Erfindung vor, eine Abstützung (22) für den Reibbremsbelag (18) schräg nach innen gerichtet auszubilden.

## Beschreibung

### Stand der Technik

Die Erfindung betrifft einen Bremsbelaghalter für eine Scheibenbremse mit den Merkmalen des Oberbegriffs des Anspruchs 1.

Scheibenbremsen heutiger Bauart weisen einen Bremssattel (Festsattel oder Schwimmsattel) auf, in dem mindestens zwei Reibbremsbeläge beiderseits einer Bremsscheibe einliegen. In Umfangsrichtung der Bremsscheibe stützt sich der Reibbremsbelag an einer Abstützung am Bremssattel selbst oder an einem Bremssattelhalter, der den Bremssattel unbeweglich (Festsattel) oder quer zur Bremsscheibe verschieblich (Schwimmsattel) hält, gegen Mitdrehen mit der rotierenden Bremsscheibe bei Betätigung der Scheibenbremse ab. Mit Bremsbelaghalter ist bei solchen Scheibenbremsen der Bremssattel, in dem der Reibbremsbelag einliegt, und ggf. der Bremssattelhalter, an dem sich der Reibbremsbelag gegen Mitdrehen mit der Bremsscheibe abstützt, gemeint. Üblicherweise weisen Scheibenbremsen für beide Drehrichtungen der Bremsscheibe auf beiden Seiten des Reibbremsbelags eine Abstützung auf, von denen in Abhängigkeit von der Drehrichtung der Bremsscheibe eine wirksam ist. Die Abstützung wird auf Druck beansprucht, der bei bei Betätigung der Scheibenbremse gegen die Bremsscheibe gedrückte Reibbremsbelag wird von der drehenden Bremsscheibe gegen eine der beiden Abstützungen gedrückt. Die Seite, an der der Reibbremsbelag gegen die Abstützung gedrückt wird, wird nachfolgend als auslaufende Seite des Reibbremsbelags bezeichnet. Die der auslaufenden Seite abgewandte Seite des Reibbremsbelags ist die einlaufende Seite.

Die drehende Bremsscheibe übt ein Moment um eine gedachte, zur Bremsscheibe senkrechte Achse auf den bei Betätigung der Scheibenbremse gegen sie gedrückten Reibbremsbelag aus, sofern sich die Abstützung nicht auf einer gedachten Wirkungslinie einer von der drehenden Bremsscheibe auf den Reibbremsbelag ausgeübten Reibungskraft befindet. Diese Wirkungslinie geht üblicherweise durch einen Flächenmittelpunkt des Reibbremsbelags, wobei eine Bezugsfläche für den Flächenmittelpunkt eine tatsächlich gegen die Bremsscheibe gedrückte und an der Bremsscheibe anliegende Fläche des Reibbremsbelags ist. Zur Vermeidung eines solchen Moments schlägt die US-PS 5,909,785 vor, die Abstützung der Reibbremsbeläge auf der gedachten Wirkungslinie der von der drehenden Bremsscheibe auf den gegen sie gedrückten Reibbremsbelag ausgeübte Reibungskraft anzuordnen. Da sich die Abstützung außerhalb eines Umfangs der Bremsscheibe befindet, muss sie mit Abstand vom eigentlichen Reibbremsbelag angeordnet werden. Der Bremssattel baut dadurch groß.

### Vorteile der Erfindung

Beim erfindungsgemäßen Bremsbelaghalter mit den Merkmalen des Anspruchs 1 verläuft die Abstützung des Reibbremsbelags in einem Winkel zu einer gedachten Radialen zur Bremsscheibe. Bei Betätigung der Scheibenbremse übt die in einem Winkel zur gedachten Radialen zur Bremsscheibe verlaufende Abstützung eine bezüglich der Bremsscheibe nach innen oder außen gerichtete Kraft auf die von der drehenden Bremsscheibe gegen die Abstützung gedrückte, auslaufende Seite des Reibbremsbelags aus. Diese Kraft bewirkt ein Moment auf den Reibbremsbelag um eine gedachte Achse senkrecht zur Bremsscheibe. Der Winkel der Abstützung zur gedachten Radialen zur Bremsscheibe ist so gewählt, dass die bei Betätigung der Scheibenbremse von der Abstützung auf die auslaufende Seite des Reibbremsbelags ausgeübte Kraft dem Moment entgegengerichtet ist, das dem von der drehenden Bremsscheibe auf den gegen sie gedrückten Reibbremsbelag ausgeübten Moment entgegengerichtet ist. Durch den Winkel, in dem die Abstützung des Reibbremsbelags zur gedachten Radialen der Bremsscheibe verläuft, wird ein teilweiser oder vollständiger Ausgleich der von der drehenden Bremsscheibe und der Abstützung auf den Reibbremsbelag ausgeübten Momente erreicht. Dabei kann die Abstützung dicht am eigentlichen Reibbremsbelag angeordnet sein, so dass der Bremsbelaghalter kompakt ausgebildet werden kann. Die Erfindung ermöglicht eine kompakte Ausbildung eines Bremssattels einer Scheibenbremse, eine Vergrößerung des Bremssattels gegenüber herkömmlichen Bremssätteln ist nicht notwendig. Weiterer Vorteil der Erfindung ist, dass die Abstützung nicht auf der gedachten Wirkungslinie der von der drehenden Bremsscheibe auf den gegen sie gedrückten Reibbremsbelag ausgeübten Reibungskraft angeordnet sein muss. Die räumliche Anordenbarkeit der Abstützung für den Reibbremsbelag ist daher freier.

Bei Bezugnahmen auf die Bremsscheibe wie beispielsweise der Radialen oder Senkrechten zur Bremsscheibe ist eine vorgesehene Einbaulage des Bremsbelaghalters angenommen. Die Abstützung kann beispielsweise gerade oder bogenförmig ausgebildet sein. Sie kann beispielsweise eine Schräge am Reibbremsbelag, am Bremsbelaghalter oder auch an beiden Teilen aufweisen. Wesentlich ist, dass die Abstützung durch den Winkel, in dem sie zur gedachten Radialen zur Bremsscheibe verläuft, ein Moment auf den sich an ihr abstützenden Reibbremsbelag bewirkt, das dem von der drehenden Bremsscheibe auf den Reibbremsbelag bewirkten Moment entgegengerichtet ist.

Die Unteransprüche haben vorteilhafte Ausgestaltungen und Weiterbildungen der im Anspruch 1 angegebenen Erfindung zum Gegenstand.

Da sich die Abstützung für den Reibbremsbelag üblicherweise im Außenbereich oder außerhalb eines Umfangs der Bremsscheibe befindet und die drehende Bremsscheibe deswegen ein Moment auf den bei Betätigung der Scheibenbremse gegen sie gedrückten Reibbremsbelag ausübt, der die auslaufende Seite bezüglich der Bremsscheibe nach außen drückt, ist die Abstützung insbesondere schräg nach innen gerichtet, so dass sie die auslaufende Seite des Reibbremsbelags bezüglich der Bremsscheibe nach innen drückt (Anspruch 2).

Die Erfindung ermöglicht die Anordnung der Abstützung vollständig oder zumindest teilweise innerhalb eines Umfangs der Bremsscheibe (Anspruch 3), wodurch ebenfalls eine kompakte Bauweise des Bremssattels möglich ist.

Eine Weiterbildung der Erfindung sieht ein Widerlager für den Reibbremsbelag auf der der Abstützung gegenüberliegenden Seite, also auf der einlaufenden Seite des Reibbremsbelags vor. (Anspruch 4). Das Widerlager hält den Reibbremsbelag auf Zug gegen Mitdrehen mit der drehenden Bremsscheibe. Das Widerlager ist insbesondere bei niedriger Bremskraft, also bei niedriger Andruckkraft des Reibbremsbelags gegen die Bremsscheibe wirksam. Da das Widerlager auf Zug wirkt, können Quietschgeräusche vermieden werden, die bei einer Abstützung der Reibbremsbelags auf Druck bei niedriger Andruckkraft auftreten können. Bei höherer Bremskraft und Andruckkraft des Reibbremsbelags gegen die Bremsscheibe wird der Reibbremsbelag in zunehmendem Maße von der auf Druck wirkenden Abstützung an der auslaufenden Seite des Reibbremsbelags gegen Mitdrehen mit der drehenden Bremsscheibe gehalten.

Gemäß Anspruch 6 ist das Widerlager und/oder ein mit dem Widerlager zusammenwirkendes Halteelement des Reibbremsbelags ebenso wie die Abstützung auf der anderen Seite des Reibbremsbelags in einem Winkel zu einer gedachten Radialen zur Bremsscheibe angeordnet, der dem von der drehenden Bremsscheibe auf den Reibbremsbelag ausgeübten Moment um eine gedachte Achse senkrecht zur Bremsscheibe entgegenwirkt.

### Zeichnung

Die Erfindung wird nachfolgend anhand eines in der Zeichnung dargestellten Ausführungsbeispiels näher erläutert. Es zeigen:
- Figur 1: einen erfindungsgemäßen Bremsbelaghalter einer Scheibenbremse; und
- Figur 2: einen Bremssattelhalter und einen Reibbremsbelag des Bremssattels aus Figur 1.

### Beschreibung des Ausführungsbeispiels

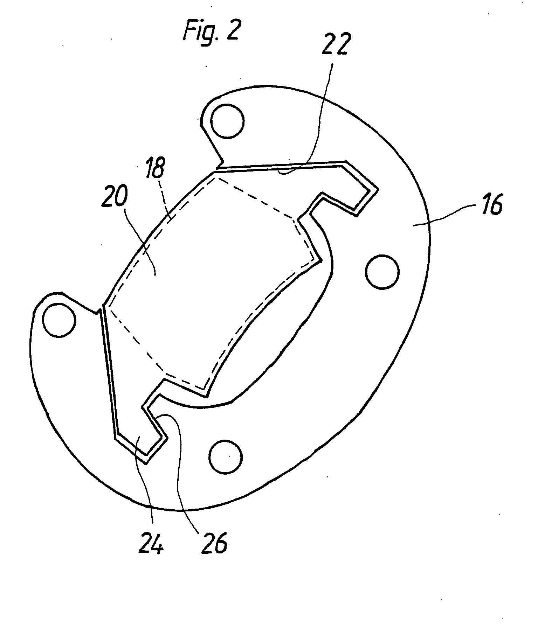

Der in der Zeichnung dargestellte, erfindungsgemäße Bremsbelaghalter 10 weist einen Bremssattel 12 auf, der in an sich bekannter Weise quer zu einer Bremsscheibe 14 verschieblich an einem vielfach auch als Bremsträger bezeichneten Bremssattelhalter 16 geführt ist (sog. Schwimm- oder Faustsattel). Im Bremssattel 12 und dem Bremsbelaghalter 16 liegen in bekannter Weise zwei deckungsgleiche Reibbremsbeläge 18 ein, die beiderseits der Bremsscheibe 14 angeordnet sind. Die Reibbremsbeläge 18 sind in Figur 2 mit Strichlinien dargestellt, sie werden von Bremsbelagträgerplatten 20 verdeckt, auf denen sie angebracht sind. Zur Betätigung der Scheibenbremse weist der Bremssattel 12 einen in der Zeichnung nicht sichtbaren Hydraulikkolben auf, der quer zur Bremsscheibe 14 verschiebbar im Bremssattel 12 aufgenommen ist. Mit dem Hydraulikkolben ist der zwischen diesem und der Bremsscheibe 14 angeordnete Reibbremsbelag 18 gegen die Bremsscheibe 14 drückbar. Der auf der dem Hydraulikkolben abgewandten Seite der Bremsscheibe 14 angeordnete Reibbremsbelag 18 wird durch eine Verschiebung des Bremssattels 12 quer zur Bremsscheibe 14 bei Betätigung der Scheibenbremse gegen die Bremsscheibe 14 gedrückt. Der Bremssattel 12 und der Bremssattelhalter 16 bilden den Bremsbelaghalter 10 für die einliegenden Reibbremsbeläge 18.

In Figur 2 ist der Bremsbelaghalter 10 ohne den Bremssattel 12 dargestellt, so dass der Blick auf die im Bremssattelhalter 16 einliegende Bremsbelagträgerplatte 20 mit dem Reibbremsbelag 18 sichtbar ist. Der Bremssattelhalter 16 weist Schrägflächen an beiden in Umfangsrichtung der Bremsscheibe 14 weisenden Seiten der Bremsbelagträgerplatte 20 auf. Diese Schrägflächen bilden Abstützungen 22, die den Reibbremsbelag 18 gegen Mitdrehen mit der Bremsscheibe 14 bei Betätigung der Scheibenbremse abstützen. Die Abstützungen 22 sind innerhalb eines Umfangs der Bremsscheibe 14 angeordnet. Abhängig von der Drehrichtung der Bremsscheibe 14 ist immer nur eine der beiden Abstützungen 22 wirksam.

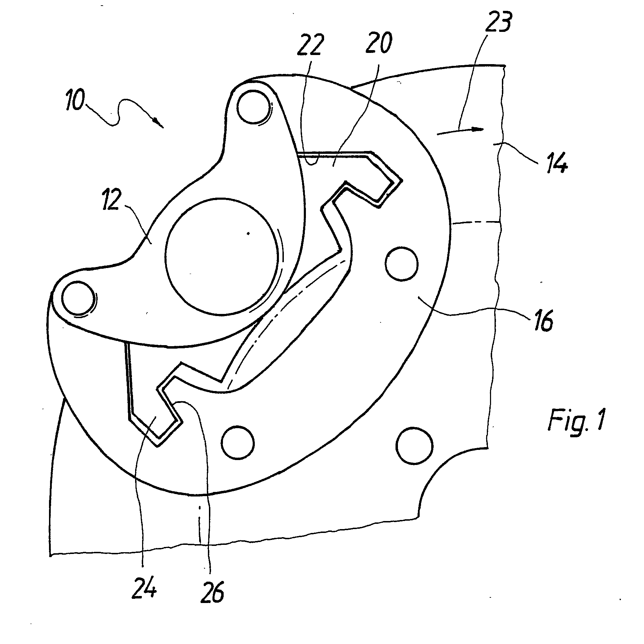

Die Abstützungen 22 sind in einem Winkel zu einer gedachten Radialen zur Bremsscheibe 14 nach innen gerichtet. Bei Betätigung der Scheibenbremse drückt die drehende Bremsscheibe 14 die Bremsbelagträgerplatte 20 des gegen sie gedrückten Reibbremsbelags 18 gegen die Abstützung 22, die aufgrund Ihrer Ausrichtung schräg nach innen die auslaufende Seite des Reibbremsbelags 18 nach innen drückt. Dabei ist mit auslaufender Seite die von der drehenden Bremsscheibe 14 gegen die zugeordnete Abstützung 22 gedrückte Seite des Reibbremsbelags 18 bzw. der Bremsbelagträgerplatte 20 gemeint. Die auslaufende Seite ist drehrichtungsabhängig, bei umgekehrter Drehrichtung der Bremsscheibe 14 ist jeweils die andere Seite des Reibbremsbelags 18 bzw. der Bremsbelagträgerplatte 20 die auslaufende Seite. Zur Erläuterung wird in Figur 1 eine Drehung der Bremsscheibe 14 in Richtung des Pfeils 23 angenommen.

Die von der Abstützung 22 auf den bei Betätigung der Scheibenbremse gegen sie gedrückten Bremsbelagträgerplatte 20 ausgeübte Kraft bewirkt ein Moment um eine gedachte Achse senkrecht zur Bremsscheibe 14, das an der auslaufenden Seite des Reibbremsbelags 18 bezüglich der Bremsscheibe 14 nach innen gerichtet ist. Dieses Moment ist einem Moment entgegengerichtet, das die drehende Bremsscheibe 14 bei Betätigung der Scheibenbremse auf den gegen sie gedrückten Reibbremsbelag 18 ausübt. Die von der Abstützung 22 und von der drehenden Bremsscheibe 14 auf den Reibbremsbelag 18 ausgeübten Momente gleichen einander teilweise oder vollständig aus. Der Winkel, unter dem die Abstützung 22 in Bezug auf die gedachte Radiale zur Bremsscheibe 14 verläuft, beeinflusst die Größe der Kraft, die die Abstützung 22 bei Betätigung der Scheibenbremse auf die auslaufende Seite des Reibbremsbelags 18 ausübt. Der Winkel der Abstützung 22 zur Radialen zur Bremsscheibe 14 beeinflusst somit das bei Betätigung der Scheibenbremse von der Abstützung 22 auf den Reibbremsbelag 18 ausgeübte Moment. Ein Verhältnis des bei Betätigung der Scheibenbremse von der Abstützung 22 und des von der Bremsscheibe 14 auf den Reibbremsbelag 18 ausgeübten, entgegengerichteten Moments lässt sich also durch den Winkel der Abstützung 22 zur Radialen zur Bremsscheibe 14 beeinflussen.

Die Bremsbelagträgerplatte 20 weist hakenförmige, nach innen gerichtete Halteelemente 24 auf, die mit Widerlagern 26 des Bremssattelhalters 16 zusammenwirken. Wirksam ist abhängig von der Drehrichtung der Bremsscheibe 14 jeweils nur dasjenige Halteelement 24 und dasjenige Widerlager 26, welches der wirksamen Abstützung 22 und damit der auslaufenden Seite des Reibbremsbelags 18 bzw. seiner Bremsbelagträgerplatte 20 gegenüberliegt. Diese Seite des Reibbremsbelags 18 bzw. der Bremsbelagträgerplatte 20 wird auch als einlaufende Seite bezeichnet. Während die Abstützung 22 einen Druck in Umfangsrichtung auf die von der drehenden Bremsscheibe 14 gegen sie gedrückte Bremsbelagträgerplatte 20 ausübt, wirkt das Widerlager 26 auf Zug. Das Widerlager 26 hält den Reibbremsbelag 18 wie die Abstützung 22 gegen ein Mitdrehen mit der Bremsscheibe 14, wobei bei niedriger Bremskraft, also bei niedriger Andruckkraft des Reibbremsbelags 18 gegen die Bremsscheibe 14 überwiegend das Widerlager 26 den Reibbremsbelag 18 gegen Mitdrehen mit der Bremsscheibe 14 und mit steigender Brems- und Andruckkraft in zunehmendem Maße die Abstützung 22 den Reibbremsbelag 20 gegen Mitdrehen mit der Bremsscheibe 14 abstützt. Das Widerlager 26 vermeidet durch seine Wirkung auf Zug einen Quietschen, das insbesondere bei geringer Bremsund Andruckkraft bei einem ausschließlich auf Druck gehaltenen Reibbremsbelag auftreten kann.

Das Widerlager 26 ist in einem nach außen gerichteten Winkel zu einer gedachten Radialen zur Bremsscheibe 14 angeordnet. Dadurch übt das Widerlager 26 bei Betätigung der Scheibenbremse eine von einer Drehachse der Bremsscheibe 14 weg nach außen gerichtete Kraft auf das mit ihm zusammenwirkende Halteelement 24 aus. Die vom Widerlager 26 ausgeübte Kraft bewirkt ebenfalls ein Moment auf den Reibbremsbelag 18 um eine gedachte Achse senkrecht zur Bremsscheibe 14, das dem von der drehenden Bremsscheibe 14 auf den gegen sie gedrückten Reibbremsbelag 18 ausgeübten Moment entgegengerichtet ist.

## Patentansprüche

1. Bremsbelaghalter für eine Scheibenbremse, mit einem im Bremsbelaghalter einliegenden Reibbremsbelag und mit einer Abstützung an einer auslaufenden Seite des Reibbremsbelags, die den Reibbremsbelag gegen Mitdrehen mit einer Bremsscheibe bei Betätigung der Scheibenbremse abstützt, **dadurch gekennzeichnet, dass** die Abstützung (22) in einem Winkel zu einer gedachten Radialen zur Bremsscheibe (14) verläuft und einem Moment um eine gedachte, zur Bremsscheibe (14) senkrechte Achse entgegenwirkt, das die drehende Bremsscheibe (14) bei betätigter Scheibenbremse auf den gegen sie gedrückten Reibbremsbelag (18) ausübt.

2. Bremsbelaghalter nach Anspruch 1, **dadurch gekennzeichnet, dass** die Abstützung (22) in einem bezüglich der Bremsscheibe (14) nach innen gerichteten Winkel zur gedachten Radialen zur Bremsscheibe (14) verläuft.

3. Bremssattel nach Anspruch 1, **dadurch gekennzeichnet, dass** die Abstützung (22) zumindest teilweise innerhalb eines Umfangs der Bremsscheibe (14) angeordnet ist.

4. Bremsbelaghalter nach Anspruch 1, **dadurch gekennzeichnet, dass** der Bremsbelaghalter (10) ein Widerlager (26) an einer der auslaufenden Seite gegenüberliegenden Seite (einlaufende Seite) des Reibbremsbelags (18) aufweist, das den Reibbremsbelag (18) gegen Mitdrehen mit der drehenden Bremsscheibe (14) bei Betätigung der Scheibenbremse hält und das mit einem hakenförmigen Halteelement (24) des Reibbremsbelags (18) zusammenwirkt.

5. Bremsbelaghalter nach Anspruch 4, **dadurch gekennzeichnet, dass** das hakenförmige Halteelement (24) bezüglich der Bremsscheibe (14) nach innen gerichtet ist.

6. Bremsbelaghalter nach Anspruch 4, **dadurch gekennzeichnet, dass** das Widerlager (26) und/oder das Halteelement (24) in einem Winkel zu einer gedachten Radialen zur Bremsscheibe (14) verläuft und einem Moment um eine gedachte, zur Bremsscheibe (14) senkrechte Achse entgegenwirkt, das die rotierende Bremsscheibe (14) bei betätigter Scheibenbremse auf den gegen sie gedrückten Reibbremsbelag (18) ausübt.
